# EUROPEAN PATENT APPLICATION

(11) **EP 1 911 551 A1**
(43) Date of publication of application: **16.04.2008**
(21) Application number: 07118118.4
(22) Date of filing: 09.10.2007
(51) Int. Cl.: B25J 9/02, B23Q 1/44, B23Q 1/62, B25J 9/10, F16H 25/18

(54) **Cross-guiding motion platform**

(30) Priority: 12.10.2006 US 546628
(71) Applicant: Delphi Technologies, Inc., Troy, Michigan 48007 (US)
(72) Inventor: Garner, Timothy D., Kokomo, IN 46902 (US)
(74) Representative: Denton, Michael John

(57) **Abstract**

A motion mechanism for achieving motion in two directions that are at right angles to each other includes two linear actuator assemblies (12,14) arranged parallel to each other, a carriage assembly (16,18) mounted on each of the linear actuator assemblies, and a head (20) slidably linked on opposite sides thereof to the carriage assemblies via slide assemblies (24,30) that have slide members (26,28;32;34) that are linearly movable with respect to each other along equal but opposite angles with respect to the direction of movement of the carriages.

## Description

### Technical Field

This invention relates to a motion platform, and more particularly to a motion plate that efficiently achieves high vertical force and small vertical travel.

### Background of the Invention

Conventional motion platforms with high Z-force (vertical) and small Z-travel are typically inefficient. In most cases, the large components (actuators, frames, bearings, etc.) needed to produce a high Z-force are not optimized for small Z-travel. Motion platforms that require horizontal and vertical motion often employ a cascaded set of mechanisms in which the Z-axis (vertical) mechanism is carried on the horizontal mechanism. The Z-axis mechanism usually employs a set of linear bearings and an actuator that is set at a right angle to the horizontal mechanism. The resulting apparatus tends to be very long, especially compared to a potentially short vertical travel requirement. The mechanisms for achieving vertical movement also tend to be very heavy, thereby placing an exceptionally large burden on the horizontal mechanism. The drive motor and lead screw required to accommodate this heavy burden is also very large and heavy, making the entire apparatus wider, taller and more expensive than similar motion platforms that are not required to exert a large vertical force.

The majority of multiple degree-of-freedom mechanisms that are used in robotic applications are so-called serial mechanisms. A serial mechanism is one in which a plurality of links are connected together in a series to form an open chain and are moved with respect to each other by actuators connected between them to manipulate an object supported at the remote end of the chain of links. This type of mechanical mechanism has the advantages of being able to access large work spaces, and of simplicity of design and geometric analysis. It also has been shown that the forward kinematic problem is also directly solvable for serial mechanisms. The forward kinematic problem is defined as the task of solving for the position and orientation of the remote end of the mechanism on which a tool is mounted, given the lengths of all of the links and the angles between adjoining links.

Despite the above-mentioned advantages, serial mechanisms are inherently plagued with a number of disadvantages. For one, the links at the base of a serial mechanism must support all of the more remote links of the mechanism. As a result, large actuators are required to drive the actuated joints at the base of the mechanism. For precise control, it is advantageous to have an actuator as close as possible to the tool or other object being driven by the actuator. With a serial mechanism, having an actuator close to the object being driven compromises the overall performance of the mechanical system, since actuators are typically heavy electric motors. Another problem of serial mechanisms occurs when the position of the mechanism remote from the support structure is determined by sensors, such as encoders, which are located at the joints of the mechanism and measure the angles between adjoining lengths. Errors in measurement by the encoders are cumulative, i.e., the error in the calculated position of the remote end of the mechanism is a sum of errors of the individual encoders, so it is difficult to determine the position of the remote end with accuracy. Even when there is no encoder error, calculation of the position of the remote end may be inaccurate due to bending of the lengths forming the serial mechanism.

Another variety of multiple degree-of-freedom mechanisms is referred to as a parallel mechanism. In parallel mechanisms, a plurality of actuators drive a tool or other object in "parallel," typically via a plurality of stiff links and joints. The term parallel in this sense means that the links share the load being supported by the mechanism, and it does not require that the links be geometrically parallel or imply that they are. Parallel mechanisms are inherently stiffer, more accurate, and capable of carrying higher loads than serial mechanisms. This is because parallel mechanisms have multiple mechanical ties between a base support structure and the object being supported so that the weight of the object is divided among a plurality of members, whereas in serial mechanisms, each link must support the entire weight of the object. A well-known example of a parallel mechanism is the Stewart platform in which a load is supported by a plurality of links which can be adjusted in length by actuators to vary the position and orientation of the load. A parallel mechanism typically has all of its actuators mounted either on or relatively close to a base support structure, so the actuators either do not move or move very little during the operation of the mechanism. This minimizes the moving mass of the mechanism, making it much quicker than an equivalent serial mechanism. Further, since the entire load carried by the mechanism is not applied to each actuator as in a serial mechanism, but is instead distributed among the actuators, the load capacity of the mechanism can be greatly increased relative to that of the serial mechanism without requiring large capacity (and thus bulky and heavy) actuators. In addition, errors in encoders or other sensors for sensing the position orientation of the lengths forming a parallel mechanism are averaged rather than summed as in a serial mechanism, so the position and orientation of a load can be determined with high accuracy.

In spite of such advantages, parallel mechanisms have not achieved widespread acceptance as robotic or teleoperated devices due to a number of drawbacks. One is that the conventional parallel mechanisms have limited reachable workspaces compared to serial mechanisms, so they are limited to tasks which do not require a large workspace. This is in part because parallel mechanisms have multiple mechanical ties to a fixed support structure whereas serial mechanisms have only one, and in part because the parallel links of a parallel mechanism can interfere with one another in certain positions. In addition the forward kinematics problem for a parallel mechanism can be extremely complex mathematically, and in many cases it is not solvable, often making real-time control of a parallel mechanism difficult or impossible.

Both serial and parallel mechanisms of conventional design tend to suffer from backlash in the components, relatively high friction, a narrow operational bandwidth, and high inertia which makes high positional resolution and highly sensitive force control difficult to achieve.

A friction stir welding application requires a welding head with a very limited vertical travel (typically a few millimeters), but with high force (typically up to 1000 kilograms). Conventional serial or cascaded mechanisms are not particularly well suited for automated friction stir welding applications requiring very limited vertical travel. Simple friction stir welding processes do not require the complexity or expense of typical parallel mechanisms such as Stewart platforms.

### Summary of the Invention

The invention provides a motion mechanism having two linear actuator assemblies that are arranged parallel to each other. Each of the actuator assemblies includes a linearly moveable carriage assembly. The carriage assemblies are moveable along parallel lines in either the same or opposite directions. A head for carrying a tool or workpiece is generally disposed between the two linear actuators. First and second slide assemblies are employed for operatively connecting opposite sides of the head to the carriages. The slide assemblies are oriented to achieve linear movement of the head along lines that are at an acute angle with respect to the parallel lines along which the carriages are moveable, the angles being of equal magnitude but of opposite slope. This arrangement allows both horizontal and vertical motion. More specifically, moving the carriages in the same direction achieves horizontal movement of the head while moving the carriages in opposite directions achieves a vertical motion of the head. Controlling the sum and the differences of the two axis of motion can generate combinations of horizontal and vertical motion.

These and other features, advantages and objects of the present invention will be further understood and appreciated by those skilled in the art by reference to the following specification, claims and appended drawings.

### Brief Description of the Drawings

The present invention will now be described, by way of example, with reference to the accompanying drawings, in which:
FIG. 1 is a respective view of a motion mechanism in accordance with the invention for achieving both horizontal and vertical movement.
FIG. 2 is a perspective view of a machining station utilizing the motion mechanism of FIG. 1.

### Description of the Preferred Embodiments

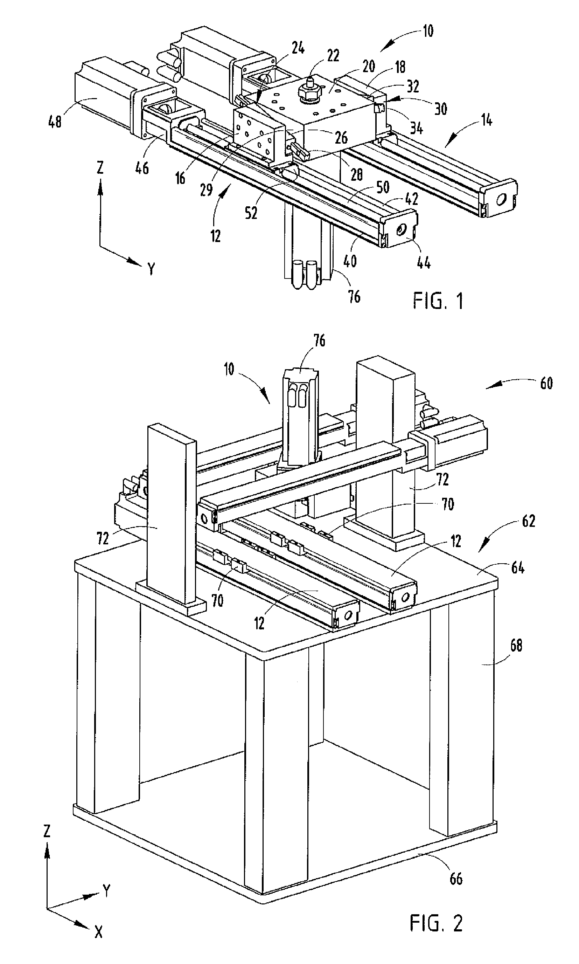

Shown in FIG. 1 is a motion mechanism for achieving both horizontal movement in the Y direction and vertical movement in the Z direction. Motion mechanism 10 includes two linear actuator assemblies 12, 14 having carriage assemblies 16, 18 that are moveable along parallel lines (along the Y-axis) in either the same or opposite directions. Slidably supported on carriages 16, 18 is a head 20 for carrying a tool 22 (such as a friction stir welding tool) or workpiece. A first slide assembly 24 comprises a first slide member 26 (a C-shaped guide or track) that is linearly moveable along a second slide member 28 (which in the illustrated embodiment is a rail that slides along a channel defined in the C-shaped first slide member). First slide member 26 is affixed to carriage assembly 16 and second slide member 28 is affixed to a first side 29 of head 20. Slide assembly 24 is oriented to achieve linear motion of head 20 along a line that is at a first acute angle with respect to the parallel lines along which carriages 16, 18 are moveable (along the Y-axis in the illustrated embodiment). A second slide assembly 30 comprises a third slide member 32 that is linearly moveable along a fourth slide member 34. Third slide member 32 is affixed to carriage 18. Fourth slide member 34 is affixed to a second side of head 20 opposite first side 29. In the illustrated embodiment, slide member 32 is a C-shaped member defining a channel or slot along which member 34 slides. Second slide assembly 30 is oriented to achieve linear movement of head 20 along a line that is at a second acute angle which respect to the parallel lines along which carriages 16, 20 are moveable. The second acute angle is of equal magnitude to the first acute angle, but has a slope that is opposite to the slope of the first acute angle (i.e., with respect to the positive direction of the horizontal X-axis, the first angle is negative or has a negative slope, and the second angle is positive or has a positive slope of equal magnitude to the first angle).

As used herein, an acute angle is an angle between 0 degrees and 90 degrees. More typically, for the envisioned applications, the angle is between 0 degrees and 45 degrees (wherein the horizontal to vertical travel ratio is about 1:1). Typically, the acute angle has a horizontal to vertical travel ratio of from about 1:1 to about 10:1, and more typically from about 2:1 1 to about 5:1.

In the illustrated embodiment, linear actuator assemblies 12, 14 comprise side guide rails 40, 42, an end plate 44, coupling 46, electric motor 48, and threaded rod or lead screw 50 coupled to an output shaft of motor 48. A nut member 52 is treaded onto lead screw 50 and linear bearings support carriages 16, 18. Guide rails 40, 42 are designed to interlock with nut member 52 to keep it from rotating. When lead screw 50 is rotated, nut member 52 and supported carriages 16, 18 move linearly along the longitudinal axis of lead screw 50. Alternatively, linear actuator assemblies may comprise hydraulic, pneumatic, magnetic, and other types of mechanisms capable of achieving linear motion of carriages 16, 18.

As shown in FIG. 2, a machining station 60 in accordance with another aspect of this invention comprises a table 62 having a top 64 supported above a base 66 by legs 68. Affixed to tabletop 64 is at least one linear actuator assembly 12, which may be identical to linear actuator 12 shown in FIG. 1. Each of linear actuator assemblies 12 includes a carriage 70 that is linearly moveable in the longitudinal direction of linear actuator assemblies 12, and which are capable of supporting an object, such as a workpiece. Supported on stanchions 72 is a motion mechanism 10 as shown in FIG. 1. Linear actuator assemblies 12 allow movement of a workpiece supported on carriage 70 along the horizontal X-axis, while motion mechanism 10 facilitates movement of a tool along the perpendicular horizontal Y-axis and the vertical Z-axis.

As can be best understood with reference to FIG. 1, when carriages 16, 18 are both moved in the same direction at the same rate of speed, there can be no relative movement of slide members 28, 34 with respect to slide members 26, 32. As a result, tool 22 is moved only along the horizontal Y-axis. However, when carriage 16 is moved in the positive Y-direction and carriage 18 is moved at the same rate of speed in the negative Y-direction, there can be no movement of head 20 or tool 22 along the Y-axis. Instead, members 28 and 34 slide upwardly with respect to carriages 16 and 18, respectively, causing head 20 and tool 22 to move vertically upward along the Z-axis, for the orientation shown in FIG. 1 (it being understood that this orientation is upside down with respect to a more typical orientation shown in FIG. 2). Movement of carriages 16 and 18 at different rates of speed can achieve a combination of both horizontal and vertical movement simultaneously. In the illustrated embodiments, tool 22 is a friction stir welding tool rotated by an electric motor 76.

The motion mechanism 10 and machining station 60 of this invention are relatively simpler, lighter in weight, smaller, and less expensive than conventional serial and/or parallel motion mechanisms for achieving a comparable result in which short travel distances and high forces are required in the vertical direction. In addition, the apparatuses of this invention have the advantage of utilizing standard actuators that can be identical. For example, linear actuator assemblies 12, 14 can be identical, thereby reducing spare parts inventories. Further, with the mechanisms of this invention, two actuators share the vertical load, allowing lower cost linear bearings and longer component life. The acute angle between the directions of movement of slide members 24, 28 with respect to the horizontal linear movement of carriage 16 determines the horizontal force to vertical force relationship. Small angles allow a high vertical force to be generated using a relatively lower force in the lead screws.

It will be understood by those who practice the invention and those skilled in the art that various modifications and improvements may be made to the invention without departing from the spirit of the disclosed concept. The scope of protection afforded is to be determined by the claims and by the breadth of interpretation allowed by law.

## Claims

1. A motion mechanism for manipulating an object in space comprising:
two linear actuator assemblies, first and second carriage assemblies operatively connected to each of the linear actuator assemblies, the linear actuator assemblies and carriages being oriented to achieve movement of the carriages along parallel lines in either the same or opposite directions;
a head for carrying a tool or workpiece, the head having first and second opposite sides;
a first slide assembly comprising a first slide member linearly moveable along a second slide member, the first slide member affixed to the first side of the head, the second slide member affixed to the first carriage, the first slide assembly being oriented to achieve linear movement of the first slide member with respect to the second slide member along a line that is at a first acute angle with respect to the parallel lines along which the carriages are moveable;
a second slide assembly comprising a third slide member linearly moveable along a fourth slide member, the third slide member affixed to the second side of the head, the fourth slide member affixed to the second carriage, the second slide assembly being oriented to achieve linear movement of the third slide member with respect to the fourth slide member along a line that is at a second acute angle with respect to the parallel lines along which the carriages are moveable, the second acute angle being of equal magnitude to the first acute angle, but having a slope opposite a slope of the first acute angle.

2. The motion mechanism of claim 1, wherein the linear actuator assemblies are each comprised of electric motors operatively coupled to a lead screw engaging a respective one of the carriages.

3. The motion mechanism of claim 1, wherein the slide assemblies each comprise a rail slidable along a channel.

4. The motion mechanism of claim 1, wherein one the acute angles has a horizontal to vertical travel ratio of from about 1:1 to about 10:1.

5. The motion mechanism of claim 1, wherein one the acute angles has a horizontal to vertical travel ratio of from about 2:1 to about 5:1.

6. The motion mechanism of claim 1, further comprising a friction stir welding tool supported on the head.

7. A machining station comprising:
a table having a horizontal top;
at least one linear actuator assembly having a movable fixture for moving a workpiece in a first horizontal direction affixed to the top of the table;
two linear actuator assemblies supported above the table top in spaced relationship to the at least one linear actuator affixed to the table top;
a first carriage assembly operatively connected to one of the two linear actuator assemblies, and a second carriage operatively connected to the other of the two linear actuator assemblies, the linear actuator assemblies and carriages being oriented so that the carriages are movable along parallel lines in either the same or opposite directions perpendicular to the direction of movement of the fixtures on the at least one linear actuator assembly affixed to the table top;
a head for carrying a tool or workpiece, the head having first and second opposite sides;
a first slide assembly comprising a first slide member linearly moveable along a second slide member, the first slide member affixed to the first side of the head, the second slide member affixed to the first carriage, the first slide assembly being oriented to achieve linear movement of the first slide member with respect to the second slide member along a line that is at a first acute angle with respect to the parallel lines along which the carriages are moveable;
a second slide assembly comprising a third slide member linearly moveable along a fourth slide member, the third slide member affixed to the second side of the head, the fourth slide member affixed to the second carriage, the second slide assembly being oriented to achieve linear movement of the third slide member with respect to the fourth slide member along a line that is at a second acute angle with respect to the parallel lines along which the carriages are moveable, the second acute angle being of equal magnitude to the first acute angle, but having a slope opposite a slope of the first acute angle.

8. The machining station of claim 7, wherein the linear actuator assemblies are each comprised of electric motors operatively coupled to a lead screw engaging a respective one of the carriages.

9. The machining station of claim 7, wherein the slide assemblies each comprise a rail slidable along a channel.

10. The machining station of claim 7, wherein one the acute angles has a horizontal to vertical travel ratio of from about 1:1 to about 10:1.

11. The machining station of claim 7, wherein one the acute angles has a horizontal to vertical travel ratio of from about 2:1 1 to about 5:1.

12. The machining station of claim 7, further comprising a friction stir welding tool supported on the head.
